# FASCICULE DE BREVET EUROPEEN

(11) **EP 1 234 984 B1**
(45) Date de publication et mention de la délivrance du brevet: **02.02.2005**
(21) Numéro de dépôt: 02290405.6
(22) Date de dépôt: 20.02.2002
(51) Int. Cl.: F16B 5/01, F16B 5/02

(54) **Dispositif d'assemblage d'un panneau en matériau composite et d'une structure**
Vorrichtung zum Verbinden einer Kompositplatte mit einer Trägerkonstruktion
Assembling device for a composite panel and structure

(30) Priorité: 22.02.2001 FR 0102387
(43) Date de publication de la demande: 28.08.2002
(73) Titulaire: AIRBUS FRANCE, 31060 Toulouse (FR)
(72) Inventeur: Bequet, Franck, Fonsorbes 31470 (FR)
(74) Mandataire: Poulin, Gérard

(56) Documents cités:
- DE-C- 19 733 372
- FR-A- 2 683 007
- US-A- 4 412 784
- US-A- 5 171 099

## Description

### Domaine technique

L'invention concerne un dispositif d'assemblage d'un panneau et d'une structure quelconque, entre lesquels des efforts importants doivent être transmis.

L'invention s'applique en particulier au cas où le panneau est réalisé en matériau composite et où la structure est métallique. Toutefois, elle n'est pas limitée à ce cas particulier et concerne également, par exemple, l'assemblage d'un panneau métallique et d'une structure métallique.

Le dispositif d'assemblage selon l'invention peut notamment être utilisé en aéronautique, par exemple pour assurer la liaison entre la voilure et le fuselage d'un aéronef, entre des panneaux de voilure et entre des tronçons de fuselage. Le dispositif d'assemblage selon l'invention peut aussi être utilisé dans le domaine spatial, par exemple pour assembler différents tronçons d'un lanceur ou de ses boosters. En effet, il permet de ne pas affecter de façon trop sensible l'état des surfaces du panneau et, par conséquent, les propriétés aérodynamiques de l'assemblage.

### Etat de la technique

Une technique habituelle d'assemblage de deux pièces consiste à utiliser au moins une éclisse. Celle-ci est placée sur les pièces à assembler et reliée à chacune d'entre elles par des organes de fixation tels que des rivets, des boulons, etc.. Cette technique d'assemblage est notamment utilisée en aéronautique, par exemple pour réaliser les jonctions entre la voilure et le fuselage d'un aéronef. Elle peut aussi être utilisée pour réaliser les jonctions entre deux parties de la voilure ou entre deux parties du fuselage.

Toutefois, cette technique connue est longue et délicate à mettre en oeuvre, notamment parce qu'elle nécessite une grande précision des alésages dans lesquels sont reçus les organes de fixation. De plus, la surépaisseur due à la présence de l'éclisse peut, dans certains cas poser des problèmes d'assemblage (par exemple lors de l'assemblage de deux éléments d'une voilure mince : la faible distance entre l'intrados et l'extrados rend alors difficile la mise en place d'une éclisse par l'intérieur de la voilure), ou d'aérodynamique (par exemple dans le cas d'une éclisse montée sur la face extérieure d'une voilure).

Une technique connue pour assembler deux pièces sans créer de perturbation relative à l'aérodynamique consiste à utiliser une liaison dite "piano", en raison de son aspect qui rappelle sur le dessin les touches d'un piano. Dans ce type d'assemblage, des évidements ou alvéoles contigus sont usinés sur les faces extérieures des panneaux métalliques, le long des bords à assembler. L'assemblage est assuré par des boulons orientés selon une direction sensiblement perpendiculaire à la surface de jonction des panneaux et sensiblement parallèle à leur face extérieure. Chaque boulon comprend un écrou et une tête reçus respectivement dans deux évidements en vis-à-vis des panneaux assemblés. Si nécessaire, la continuité de la surface usinée des panneaux est assurée en recouvrant les évidements d'une tôle de protection ou en les remplissant avec une résine (par exemple lorsque l'assemblage est réalisé sur une surface extérieure de l'avion ; la continuité de surface permet alors de limiter les problèmes d'aérodynamique).

Toutefois, cette technique d'assemblage peut difficilement s'appliquer lorsque l'un des panneaux est réalisé en matériau composite. En effet, l'usinage d'évidements profonds juxtaposés près du bord du panneau ferait perdre à celui-ci une grande partie de sa tenue mécanique dans cette zone.

Le document US-A-5 171 099 décrit un dispositif permettant d'assembler entre eux un panneau en matériau composite et une autre structure. Ce dispositif comprend un ensemble de fixations, régulièrement réparties le long de l'interface entre les pièces.

Chaque fixation comprend un premier trou, percé dans le panneau en matériau composite, perpendiculairement à ses faces et à proximité du bord à assembler. Un cylindre creux, dans lequel est logé un écrou dit "écrou à barillet", prisonnier dudit cylindre, est inséré dans ce premier trou. Un deuxième trou, sensiblement parallèle aux faces du panneau, traverse celui-ci entre le bord à assembler et le premier trou, sensiblement à égale distance desdites faces, c'est-à-dire à proximité de la fibre neutre du panneau.

Dans cet agencement connu, l'assemblage des deux pièces est assuré, dans chaque fixation, par une vis de traction qui traverse le deuxième trou formé dans le panneau ainsi qu'une bride solidaire de la structure sur laquelle on souhaite fixer le panneau. Plus précisément, la tête de la vis prend appui sur la bride alors que son extrémité filetée est vissée dans l'écrou à barillet.

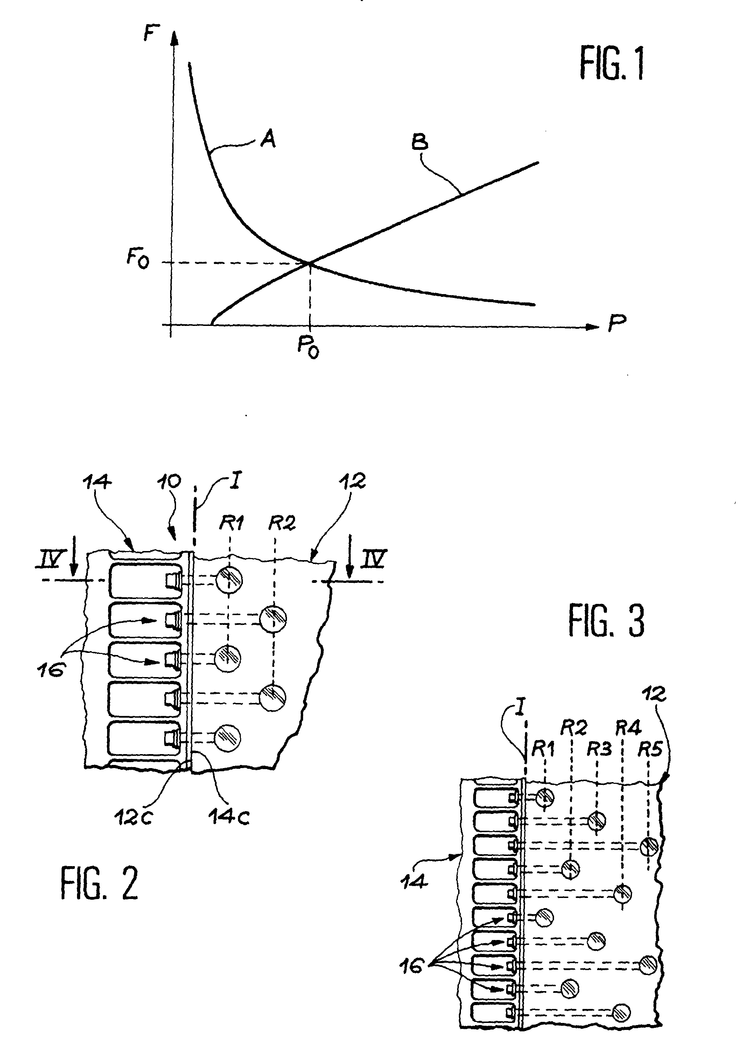

Un tel dispositif permet de résoudre le problème posé par l'assemblage d'un panneau en matériau composite et d'une autre structure. Toutefois, il ne permet pas de transmettre entre les deux pièces tous les efforts que pourraient supporter les éléments structuraux s'ils n'étaient pas affaiblis par le dispositif, comme le montre la figure 1 des dessins annexés.

La figure 1 représente un repère orthonormé sur lequel on a porté en abscisses le pas P (exprimé, par exemple, en mm) séparant deux fixations consécutives du dispositif d'assemblage décrit dans le document US-A-5 171 099 et en ordonnées le flux F transmis entre les deux pièces, c'est-à-dire la force transmise par unité de longueur de la jonction. Le flux F peut notamment être exprimé en daN/mm.

Comme l'illustre la courbe A sur la figure 1, le flux F qui peut être supporté par les vis de traction des différentes fixations (dans l'hypothèse de vis de section constante) augmente lorsque le nombre de fixations réalisées sur un dispositif d'assemblage de longueur donnée augmente, c'est-à-dire lorsque le pas P séparant deux fixations consécutives diminue.

La courbe B sur la figure 1 représente quant à elle le flux de déchirement du dispositif d'assemblage, c'est-à-dire le flux pour lequel le panneau en matériau composite se déchire suivant la ligne formée par les premiers trous, sous l'effet des efforts appliqués entre les deux pièces. La courbe B montre que le flux maximal susceptible d'être transmis au travers du dispositif d'assemblage diminue lorsque le pas P séparant deux fixations consécutives diminue. En effet, plus les trous de logement des écrous à barillet sont proches les uns des autres, moins il y a de matière entre ces derniers dans le panneau en matériau composite. Cela entraîne une fragilisation du panneau, qui peut alors se déchirer sensiblement le long de la ligne formée par les trous.

Le flux maximal qui peut donc être transmis au travers du dispositif d'assemblage considéré correspond au flux F₀ donné par l'intersection des courbes A et B sur la figure 1. Il est obtenu pour un pas P₀ entre les fixations.

Par conséquent, le dispositif d'assemblage décrit dans le document US-A-5 171 099 est inadapté lorsque les efforts qui doivent pouvoir être transmis à travers lui excèdent le flux maximal F₀, comme c'est le cas dans certaines applications, notamment en aéronautique.

On connaît aussi du document DE-C-197 33372 un dispositif de fixation d'une pale de rotor en matériau composite stratifié sur un moyeu métallique. Cette fixation est assurée par des boulons qui s'étendent parallèlement aux nappes de la pale et sont vissés dans des écrous reçus dans des évidements usinés dans la pale.

### Exposé de l'invention

L'invention a précisément pour objet un dispositif d'assemblage utilisant des fixations comparables à celles qui sont décrites dans le document US-A-5 171 099, afin notamment de pouvoir assurer la jonction entre un panneau en matériau composite et une autre structure, tout en présentant un agencement original permettant de transmettre des efforts sensiblement plus élevés.

Conformément à l'invention, ce résultat est obtenu au moyen d'un dispositif d'assemblage d'un panneau et d'une autre structure, ce dispositif comprenant une pluralité de fixations réparties le long d'une interface entre le panneau et la structure, chacune des fixations comprenant un écrou noyé dans le panneau, à proximité de l'interface, et une vis de traction traversant des parties du panneau et de la structure adjacentes à l'interface, selon une direction sensiblement perpendiculaire à l'interface, ladite vis comprenant une tête en appui sur la structure et une extrémité filetée vissée dans l'écrou, caractérisé en ce que les écrous des différentes fixations sont disposés selon au moins deux rangées situées à des distances différentes de l'interface et sensiblement parallèles à l'interface, de telle sorte que les écrous des fixations voisines sont situés dans des rangées différentes.

Comme on le verra plus en détails par la suite, pour un nombre de fixations donné, de dimensions identiques, cet agencement permet d'augmenter, dans le panneau, la quantité de matière entre deux écrous adjacents et, par conséquent, d'augmenter le flux des efforts susceptible d'être transmis par le dispositif d'assemblage.

Dans un mode de réalisation préféré de l'invention, chaque écrou est monté dans un cylindre qui traverse le panneau selon une deuxième direction sensiblement perpendiculaire à la première direction et aux faces dudit panneau.

Avantageusement, chaque cylindre comprend alors une tête fraisée, logée dans une empreinte complémentaire formée sur une face extérieure du panneau, de telle sorte qu'une face d'extrémité de ladite tête affleure ladite face extérieure. Cet agencement permet notamment de préserver les propriétés aérodynamiques du panneau, dans les applications aérospatiales.

Dans ce cas, chaque cylindre comprend également, de préférence, une extrémité filetée sur laquelle est vissé un deuxième écrou prenant appui sur une face intérieure du panneau. Cet agencement est particulièrement avantageux dans le cas où le panneau est réalisé en matériau composite. En effet, il permet de limiter les phénomènes de délaminage de ce matériau qui pourraient être provoqués par l'application d'efforts de traction/compression essentiellement au travers des cylindres dans lesquels sont montés les écrous.

Selon une première variante de réalisation de l'invention, les vis de traction des fixations dont les écrous sont disposés dans des rangées différentes transmettent des efforts sensiblement différents et présentent des sections plus élevées lorsque les efforts transmis sont plus importants.

Selon une deuxième variante de réalisation de l'invention, les vis de traction des fixations dont les écrous sont disposés dans des rangées différentes transmettent des efforts sensiblement différents et sont réalisées en un matériau présentant une résistance à la traction plus élevée lorsque les efforts transmis sont plus importants.

Selon une troisième variante de réalisation de l'invention, les vis de traction des fixations dont les écrous sont disposés dans des rangées différentes transmettent des efforts sensiblement différents et présentent un serrage plus important lorsque les efforts transmis sont plus faibles.

Une application préférée de l'invention concerne le cas où le panneau est réalisé en matériau composite. Cette application ne doit cependant pas être considérée comme limitative de la portée de l'invention, celle-ci concernant également l'assemblage de panneaux métalliques.

Enfin, lorsque la structure avec laquelle le panneau est assemblé est un panneau métallique, des alvéoles servant à loger les têtes des vis de traction sont avantageusement usinées dans ce panneau métallique.

### Brève description des dessins

On décrira à présent, à titre d'exemples non limitatifs, différents modes de réalisation de l'invention, en se référant aux dessins annexés, dans lesquels :
- la figure 1, déjà décrite, illustre en A les variations du flux F susceptible d'être appliqué à un dispositif d'assemblage conforme au document US-A-5 171 099 et, en B, les variations du flux correspondant dans ce cas à la limite de rupture d'un panneau en matériau composite, en fonction du pas P entre les fixations ;
- la figure 2 est une vue de dessus qui représente un dispositif d'assemblage selon un premier mode de réalisation de l'invention ;
- la figure 3 est une vue de dessus comparable à la figure 2, qui représente un dispositif d'assemblage selon un deuxième mode de réalisation de l'invention ;
- la figure 4 est une vue en coupe selon la ligne IV-IV de la figure 2, qui représente à plus grande échelle l'une des fixations du dispositif d'assemblage ;
- la figure 5 est une vue de dessus de la fixation, en coupe partielle selon la ligne V-V de la figure 4 ;
- la figure 6 est une vue comparable à la figure 1, sur lequel on a représenté les courbes A et B, ainsi qu'une courbe B' illustrant les variations du flux correspondant à la limite de rupture d'un panneau en matériau composite, en fonction du pas P, dans le cas d'un dispositif de jonction conforme à l'invention ; et
- la figure 7 est une vue en coupe comparable à la figure 4, illustrant une variante de réalisation de l'invention.

### Description détaillée de plusieurs modes de réalisation préférés de l'invention

Comme l'illustre schématiquement la figure 2, en vue de dessus, l'invention concerne un dispositif d'assemblage 10 permettant d'assurer la jonction entre un panneau 12 et une autre structure 14.

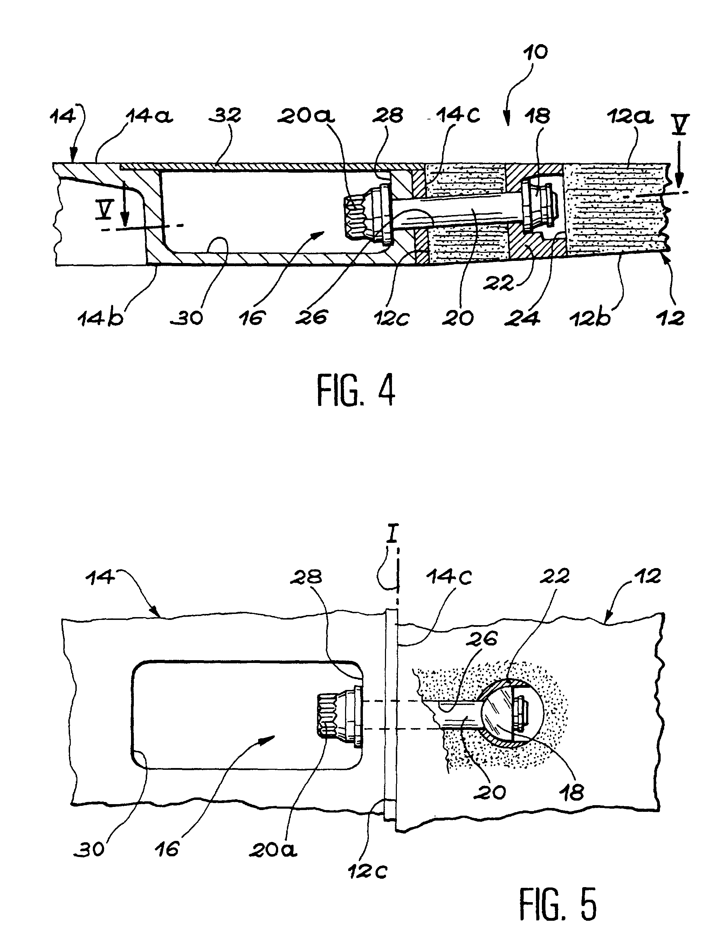

Le panneau 12 présente une face 12a (figure 4) prévue pour être tournée vers l'extérieur, dite "face extérieure" (orientée vers le haut sur la figure 2), une face 12b (figure 4) prévue pour être tournée vers l'intérieur, dite "face intérieure" (orientée vers le bas sur la figure 2), et un bord 12c prévu pour être assemblé à la structure 14 par le dispositif d'assemblage 10. Les faces extérieure 12a et intérieure 12b peuvent être planes et parallèles l'une à l'autre ou présenter une toute autre forme, sans sortir du cadre de l'invention. Par ailleurs, le bord 12c peut être plan et rectiligne, comme on l'a représenté sur la figure 2, courbe ou en forme de ligne brisée, sans sortir du cadre de l'invention.

Dans les modes de réalisation préférés de l'invention représentés sur les figures, le panneau 12 est réalisé en matériau composite. Plus précisément, il comprend un empilement de couches de fibres longues tissées ou non, noyées dans une matrice de résine, ledit empilement étant réalisé par drapage selon des techniques bien connues de l'homme du métier, sensiblement parallèlement à l'une au moins des faces extérieure 12a et intérieure 12b du panneau ou à la fibre neutre de celui-ci, située à égale distance desdites faces. En variante, le panneau 12 peut toutefois être réalisé en un autre matériau tel qu'un métal, sans sortir du cadre de l'invention.

Dans les modes de réalisation représentés à titre d'exemples sur les figures, la structure 14 a également la forme d'un panneau susceptible d'être assemblé bord à bord avec le panneau 12. Dans ce cas, la structure 14 comprend une face avant 14a (figure 4) prévue pour être placée dans le prolongement de la face extérieure 12a du panneau 12, une face arrière 14b (figure 4) prévue pour être placée dans le prolongement de la face intérieure 12b du panneau 12 et un bord 14c complémentaire du bord 12c du panneau 12. Lorsque le panneau 12 et la structure 14 sont assemblés à l'aide du dispositif d'assemblage 10, les bords 12c et 14c sont fixés l'un à l'autre selon une interface I commune.

En variante, la structure 14 peut également présenter toute autre forme, sans sortir du cadre de l'invention. Dans ce cas, le bord 14c peut notamment être formé sur une ou plusieurs brides prévues à cet effet, comme décrit dans le document US-A-5 171 099. La structure 14 est généralement métallique.

Comme l'illustre plus précisément la figure 2, le dispositif d'assemblage 10 comprend une pluralité de fixations 16, réparties le long de l'interface I définie entre les bords 12c et 14c. Plus précisément, les fixations 16 agissent sensiblement selon la fibre neutre du panneau 12 et sont régulièrement réparties le long de l'interface I selon un pas P donné.

Comme l'illustrent plus en détail les figures 4 et 5, chacune des fixations 16 comprend un écrou 18, noyé dans le panneau 12, et une vis de traction 20 qui traverse des parties du panneau 12 et de la structure 14 adjacentes à l'interface I, selon une première direction perpendiculaire à cette interface et passant sensiblement par la fibre neutre du panneau 12.

De façon plus précise, l'écrou 18 est emprisonné dans un cylindre creux 22, lui-même logé dans un trou 24 qui traverse le panneau 12, à proximité de l'interface I, selon une deuxième direction sensiblement perpendiculaire à la première, ainsi qu'aux faces extérieure 12a et intérieure 12b du panneau 12. L'écrou 18 est monté dans le cylindre 22 de telle sorte que son axe soit orienté selon la première direction lorsque le cylindre est reçu dans le trou 24. Le montage de l'écrou 18 dans le cylindre 22 peut être réalisé de façon quelconque sans sortir du cadre de l'invention.

La vis 20 est logée dans un trou 26 qui est usiné selon la première direction dans les parties du panneau 12 et de la structure 14 adjacentes à l'interface I. Le trou 26 débouche dans le trou 24, de telle sorte qu'une extrémité filetée de la vis 20 puisse être vissée dans l'écrou 18. A son extrémité opposée, la vis 20 comporte une tête 20a, prévue pour venir en appui contre une surface d'appui 28 de la structure 14. Ainsi, lorsque la vis 20 est vissée dans l'écrou 18 de telle sorte que sa tête 20a soit en appui contre la surface 28, on assemble le panneau 12 à la structure 14 en appliquant l'un contre l'autre leurs bords 12c et 14c.

Dans les modes de réalisation représentés sur les figures, qui concernent tous le cas où la structure 14 est un panneau métallique, la tête 20a de la vis 20 est reçue dans un évidement 30 usiné dans la face extérieure 14a de ce panneau et la surface d'appui 28 est formée sur l'une des faces de cet évidement. Une plaque de protection 32 peut alors fermer l'évidement 30, notamment pour assurer la continuité aérodynamique de la face extérieure 14a.

Dans d'autres modes de réalisation, non représentés, concernant le cas où la structure 14 n'a pas la forme d'un panneau, la surface d'appui 28 est constituée par la face d'une bride solidaire de ladite structure, opposée au bord 14c.

Conformément à l'invention et comme l'illustrent notamment les figures 2 et 3, au lieu d'être tous disposés à égale distance de l'interface I, les écrous 18 ainsi que les cylindres 22 dans lesquels ils sont emprisonnés et les trous 24 dans lesquels sont reçus ces cylindres sont disposés selon au moins deux rangées distinctes, situées à des distances différentes de l'interface I. Plus précisément, les différentes rangées sont toutes parallèles à l'interface I et l'agencement est tel que les écrous 18 appartenant à des fixations 16 voisines sont situés dans des rangées différentes.

Sur la figure 2, on a représenté un premier mode de réalisation dans lequel les écrous 18 sont agencés selon deux rangées, désignées par les références R1 et R2.

La figure 3 représente quant à elle un deuxième mode de réalisation dans lequel les écrous 18 sont agencés selon cinq rangées différentes, désignées par les références R1, R2, R3, R4 et R5.

Pour un nombre de fixations 16 donné, cet agencement en quinconce des écrous 18 permet d'augmenter la quantité de matière entre deux trous 24 correspondant à deux fixations consécutives. Il en résulte une moindre fragilisation du panneau aux efforts de traction et de compression. Cet agencement permet donc de diminuer le pas effectif des fixations 16 et d'augmenter proportionnellement le flux des efforts susceptibles d'être transmis par le dispositif d'assemblage 10.

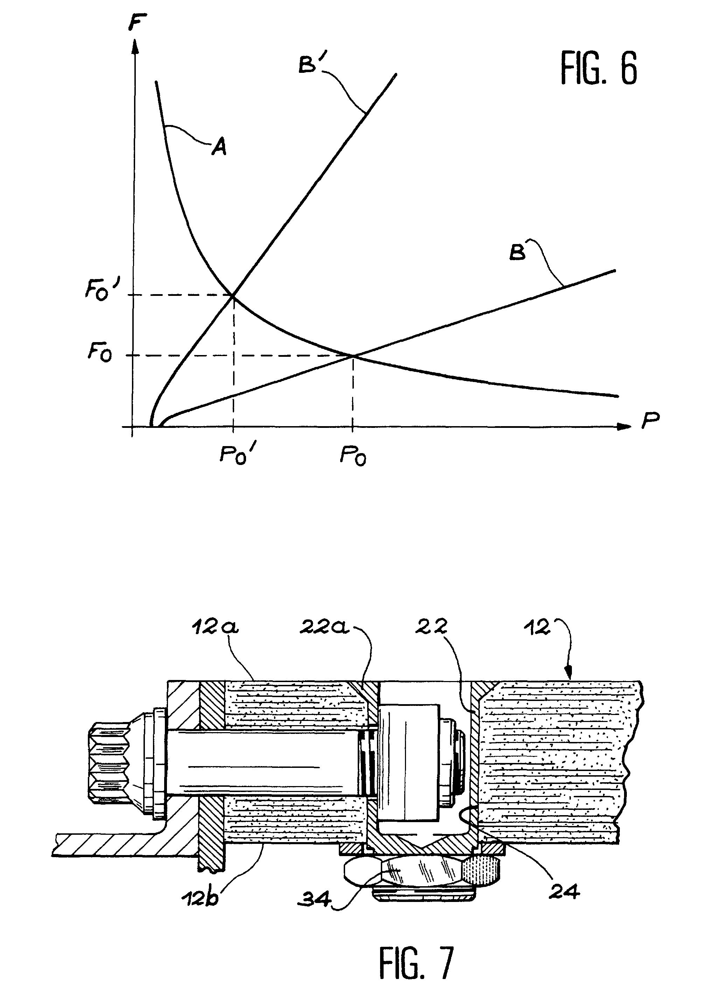

Comme la figure 1 décrite précédemment, la figure 6 représente un repère orthonormé sur lequel on a porté en abscisses le pas P (en mm) entre deux fixations 16 et en ordonnées le flux F (en daN/mm) des efforts transmis entre le panneau 12 et la structure 14.

On retrouve sur la figure 6 la courbe A représentant l'évolution du flux susceptible d'être supporté par les vis de traction 20, en fonction du pas P séparant deux fixations 16 consécutives.

On a également représenté sur la figure 6 la courbe B de la figure 1, qui illustre les variations, en fonction du pas P, du flux de déchirement d'un panneau en matériau composite assemblé à une autre structure par un dispositif d'assemblage réalisé selon la technique antérieure, c'est-à-dire dans lequel tous les écrous des différentes fixations se trouvent à une même distance de l'interface.

Par comparaison, la courbe B' de la figure 6 illustre les variations, en fonction du pas P, du flux de déchirement d'un panneau en matériau composite assemblé à une autre structure par un dispositif d'assemblage réalisé selon l'invention, c'est-à-dire dans lequel les écrous 18 sont disposés alternativement selon au moins deux rangées différentes.

La comparaison des points d'intersection de la courbe A avec les courbes B et B' montre que le flux maximal Fo' des efforts susceptibles d'être transmis par le dispositif d'assemblage 10 selon l'invention est très nettement supérieur au flux maximal Fo que peut transmettre un dispositif d'assemblage de l'art antérieur. Par ailleurs, la figure 6 montre également que le flux maximal Fo' est obtenu grâce à l'invention pour un pas Po' sensiblement inférieur au pas Po correspondant au flux maximal Fo de l'art antérieur.

Dans le mode de réalisation illustré sur les figures 4 et 5, le cylindre creux 22 affleure les faces extérieure 12a et intérieure 12b du panneau 12 sans être fixé à celui-ci.

Dans une variante de réalisation illustrée sur la figure 7, le cylindre creux 22 comporte une tête fraisée 22a, qui est logée dans une empreinte de forme complémentaire formée sur la face extérieure 12a du panneau 12, à l'extrémité du trou 24. Cet agencement permet de préserver le caractère aérodynamique de la surface extérieure 12a du panneau 12, en évitant la présence d'aspérités sur cette surface.

L'extrémité opposée du cylindre creux 22 comporte un filetage extérieur sur lequel est vissé un écrou 34. Lors du montage du cylindre, l'écrou 34 prend appui sur la face intérieure 12b du panneau 12, de façon à serrer ce dernier entre la tête 22a et l'écrou 34, selon l'axe du cylindre 22. Ce serrage permet de limiter les phénomènes de délaminage du matériau composite et de rupture de l'assemblage qui pourraient être provoqués par les efforts de traction et de compression essentiellement appliqués au panneau 12 par l'intermédiaire des cylindres 22.

Dans le dispositif d'assemblage 10 selon l'invention, les efforts qui sont transmis par des fixations 16 dont les écrous 18 sont situés dans des rangées différentes peuvent être sensiblement différents. Sur la base de cette observation, différents modes ou variantes de réalisation de l'invention sont proposés.

Selon une première variante, on donne aux vis de traction 20 des fixations 16 dont les écrous 18 sont situés dans des rangées différentes des sections plus élevées lorsque les efforts transmis sont plus importants, et inversement.

Selon une deuxième variante de réalisation de l'invention, on réalise les vis de traction 20 des fixations 16 dont les écrous 18 sont disposés dans des rangées différentes en un matériau dont la résistance à la traction est plus élevée lorsque les efforts transmis sont plus importants, et inversement.

Selon une troisième variante de réalisation, on serre plus fortement les vis de traction 20 dont les écrous sont disposés dans des rangées différentes lorsque les efforts transmis sont plus faibles, et inversement. On applique ainsi des précontraintes aux vis qui transmettent les efforts les plus faibles, de sorte que les efforts appliqués au dispositif d'assemblage sont répartis de façon plus homogène entre les différentes fixations.

Par ailleurs, il est à noter que les efforts susceptibles d'être transmis au travers du dispositif d'assemblage selon l'invention sont d'autant plus élevés que la distance séparant les différentes rangées est grande. En effet, il en découle une augmentation de la quantité de matière (et donc de la section cisaillée) entre les trous 24 des fixations 16 adjacentes, qui appartiennent à des rangées différentes. Cela a pour effet de retarder la rupture du matériau composite et d'utiliser davantage encore les capacités des vis de traction 20, sans en augmenter la masse de façon sensible. Dans le même esprit, une augmentation de la distance séparant la première rangée (R1 sur les figures 2 et 3) de l'interface I a le même effet.

Des essais comparatifs ont été effectués sur une première éprouvette réalisée selon l'art antérieur et sur une deuxième éprouvette réalisée conformément à l'invention. Dans les deux cas, on a utilisé une éprouvette en fibres de carbone constituée d'un empilement de 240 plis du matériau IM7/977-2 à 145 g/m². Chacune des fixations comprenait un cylindre de 25 mm de diamètre en Marval X12H réf. NSA5081 et une vis de traction de 15,9 mm de diamètre en Inconel 718 1510 Mpa.

La première éprouvette comprenait deux fixations dont les axes étaient espacés l'un de l'autre de 57,6 mm et situés à 50mm des bords latéraux de l'éprouvette, les axes des cylindres étant également espacés de 50 mm du bord de l'éprouvette simulant l'interface de l'assemblage. La rupture de cette première éprouvette est intervenue à 58880 daN, par rupture des vis de traction. Seule l'adjonction d'une troisième fixation intermédiaire permettrait de transmettre des efforts plus importants. Toutefois, une fixation identique aux deux précédentes, selon l'art antérieur, conduirait à une fragilisation très importante du matériau composite, qui interdit d'envisager cette solution.

La deuxième éprouvette testée comporte les deux mêmes fixations que la première, ainsi qu'une troisième fixation intermédiaire placée à égale distance des deux précédentes. Le cylindre de la troisième fixation est plus éloigné du bord de l'éprouvette simulant l'interface que les cylindres des deux premières fixations. Plus précisément, ce cylindre est situé dans une deuxième rangée, distante de 50 mm de la première rangée dans laquelle sont placés les cylindres des deux premières fixations. La rupture de cette deuxième éprouvette est intervenue, par cisaillement dans le matériau composite, pour un effort de traction de 84570 daN.

Ainsi, les essais qui ont été effectués montrent que le "flux d'enture", défini comme le rapport entre l'effort transmis par chaque fixation et le pas apparent de celles-ci, est égal à 511 daN/mm (58880/(2×57,6)) pour la première éprouvette (art antérieur) et à 979 daN/mm (84570/(3×28,8)) pour la deuxième éprouvette (invention). Ces observations montrent que la mise en oeuvre de l'invention permet sensiblement de doubler le flux maximal que peut transmettre le dispositif d'assemblage, grâce au doublement du pas rendu possible par la disposition en quinconce des écrous dans lesquels sont vissées les vis de traction.

Bien entendu, l'invention n'est pas limitée aux modes de réalisation et variantes qui ont été décrits à titre d'exemple mais couvre tous les modes de réalisation et variantes dans la portée des revendications. Ainsi, même si l'invention est particulièrement avantageuse dans le cas où le panneau est réalisé en matériau composite, compte tenu des problèmes de déchirement posés par un tel panneau, elle peut aussi être utilisée avec des panneaux réalisés en tout autre matériau et notamment en métal. Par ailleurs, l'ensemble écrou-cylindre creux peut présenter toute autre forme connue de l'homme du métier sans sortir du cadre de l'invention.

## Revendications

1. Dispositif d'assemblage (10) d'un panneau (12) et d'une autre structure (14), ce dispositif comprenant une pluralité de fixations (16) réparties le long d'une interface (I) entre le panneau (12) et la structure (14), chacune des fixations (16) comprenant un écrou (18) noyé dans le panneau (12), à proximité de l'interface (I), et une vis de traction (20) traversant des parties du panneau (12) et de la structure (14) adjacentes à l'interface (I), selon une première direction sensiblement perpendiculaire à l'interface, ladite vis comprenant une tête (20a) en appui sur la structure (14) et une extrémité filetée vissée dans l'écrou (18), **caractérisé en ce que** les écrous (18) des différentes fixations (16) sont disposés selon au moins deux rangées (R1, R2, ...R5) situées à des distances différentes de l'interface et sensiblement parallèles à l'interface, de telle sorte que les écrous (18) des fixations (16) voisines sont situés dans des rangées différentes.

2. Dispositif d'assemblage selon la revendication 1, dans lequel chaque écrou (18) est monté dans un cylindre (22) qui traverse le panneau (12) selon une deuxième direction sensiblement perpendiculaire à la première direction et aux faces (12a, 12b) dudit panneau.

3. Dispositif d'assemblage selon la revendication 2, dans lequel chaque cylindre (22) comprend une tête fraisée (22a), logée dans une empreinte complémentaire formée sur une face extérieure (12a) du panneau (12), de telle sorte qu'une face d'extrémité de ladite tête affleure ladite face extérieure.

4. Dispositif d'assemblage selon la revendication 3, dans lequel chaque cylindre (22) comprend également une extrémité filetée, sur laquelle est vissé un deuxième écrou (34) prenant appui sur une face intérieure (12b) du panneau (12).

5. Dispositif d'assemblage selon l'une quelconque des revendications 1 à 4, dans lequel les vis de traction (20) des fixations (16) dont les écrous (18) sont disposés dans des rangées (R1, R2, ...R5) différentes transmettent des efforts sensiblement différents et présentent des sections plus élevées lorsque les efforts transmis sont plus importants.

6. Dispositif d'assemblage selon l'une quelconque des revendications 1 à 4, dans lequel les vis de traction (20) des fixations (16) dont les écrous (18) sont disposés dans des rangées (R1, R2, ...R5) différentes transmettent des efforts sensiblement différents et sont réalisées en un matériau présentant une résistance à la traction plus élevée lorsque les efforts transmis sont plus importants.

7. Dispositif d'assemblage selon l'une quelconque des revendications 1 à 4, dans lequel les vis de traction (20) des fixations (16) dont les écrous (18) sont disposés dans des rangées (R1, R2, ...R5) différentes transmettent des efforts sensiblement différents et présentent un serrage plus important lorsque les efforts transmis sont plus faibles.

8. Dispositif d'assemblage selon l'une quelconque des revendications 1 à 7, dans lequel ledit panneau (12) est réalisé en un matériau composite.

9. Dispositif d'assemblage selon l'une quelconque des revendications 1 à 8, dans lequel ladite structure (14) est un panneau métallique, des évidements (30) servant à loger les têtes (20a) des vis de traction (20) étant usinées dans ledit panneau métallique.

## Patentansprüche

1. Vorrichtung zum Verbinden (10) einer Platte (12) und einer anderen Struktur (14), wobei die Vorrichtung mehrere entlang einer Grenzfläche (I) zwischen der Platte (12) und der Struktur (14) verteilte Befestigungen (16) aufweist und jede der Befestigungen (16) eine in Nähe der Grenzfläche (I) in die Platte (12) eingelassene Mutter (18) sowie eine Zugschraube (20), die Teile der Platte (12) und der Struktur (14) angrenzend an die Grenzfläche (I) in einer ersten, zur Grenzfläche im wesentlichen senkrechten Richtung durchsetzt, umfasst, wobei die Schraube einen an der Struktur (14) anliegenden Kopf (20a) und ein in die Mutter (18) eingeschraubtes Gewindeende umfasst, **dadurch gekennzeichnet, dass** die Muttern (18) der verschiedenen Befestigungen (16) in mindestens zwei in unterschiedlichen Abständen von der Grenzfläche befindlichen Reihen (R1, R2, ... R5) im wesentlichen parallel zu der Grenzfläche derart angeordnet sind, dass sich die Muttern (18) benachbarter Befestigungen (16) in unterschiedlichen Reihen befinden.

2. Verbindungsvorrichtung nach Anspruch 1, wobei jede Mutter (18) in einem Zylinder (22) angebracht ist, der die Platte (12) in einer zur ersten Richtung und zu den Flächen (12a,12b) der Platte im wesentlichen senkrechten zweiten Richtung durchsetzt.

3. Verbindungsvorrichtung nach Anspruch 2, wobei jeder Zylinder (22) einen Senkkopf (22a) umfasst, der in einer an einer Außenfläche (12a) der Platte (12) ausgebildeten komplementären Vertiefung derart angeordnet ist, dass eine Endfläche des Kopfs mit der Außenfläche bündig ist.

4. Verbindungsvorrichtung nach Anspruch 3, wobei auch jeder Zylinder (22) ein Gewindeende aufweist, auf das eine an der Innenfläche (12b) der Platte (12) anliegende zweite Mutter (34) geschraubt ist.

5. Verbindungsvorrichtung nach einem der Ansprüche 1 bis 4, wobei die Zugschrauben (20) der Befestigungen (16), deren Muttern (18) in unterschiedlichen Reihen (R1, R2, ... R5) angeordnet sind, wesentlich unterschiedliche Kräfte übertragen und größere Querschnitte aufweisen, wenn die übertragenen Kräfte größer sind.

6. Verbindungsvorrichtung nach einem der Ansprüche 1 bis 4, wobei die Zugschrauben (20) der Befestigungen (16), deren Muttern (18) in unterschiedlichen Reihen (R1, R2, ... R5) angeordnet sind, wesentlich unterschiedliche Kräfte übertragen und aus einem Material, das eine stärkere Zugfestigkeit aufweist, hergestellt sind, wenn die übertragenen Kräfte größer sind.

7. Verbindungsvorrichtung nach einem der Ansprüche 1 bis 4, wobei die Zugschrauben (20) der Befestigungen (16), deren Muttern (18) in unterschiedlichen Reihen (R1, R2, ... R5) angeordnet sind, wesentlich unterschiedliche Kräfte übertragen und stärker angezogen sind, wenn die übertragenen Kräfte geringer sind.

8. Verbindungsvorrichtung nach einem der Ansprüche 1 bis 7, wobei die Platte (12) aus einem Verbundmaterial hergestellt ist.

9. Verbindungsvorrichtung nach einem der Ansprüche 1 bis 8, wobei die Struktur (14) eine Metallplatte ist, und Ausnehmungen (30), die zur Aufnahme der Köpfe (20a) der Zugschrauben (20) dienen, in die Metallplatte eingebracht sind.

## Claims

1. Device (10) for assembling a panel (12) and another structure (14), this device including a plurality of mounts (16) distributed along an interface (I) between the panel (12) and the structure (14), each of the mounts (16) including a nut (18) embedded in the panel (12), near the interface (I), and a tension screw (20) passing through parts of the panel (12) and the structure (14) adjacent to the interface (I), along a first direction approximately perpendicular to the interface, said screw including a head (20a) supported on the structure (14) and a threaded end screwed into the nut (18), **characterized in that** the nuts (18) of the different mounts (16) are arranged along at least rows (R1, R2, ... R5) at different distances from the interface and substantially parallel to the interface, in such a way that the nuts (18) of the adjacent mounts (16) are located in different rows.

2. Assembly device according to claim 1, wherein each nut (18) is mounted in a cylinder (22) which passes through the panel (12) along a second direction approximately perpendicular to the first direction and to the surfaces (12a, 12b) of said panel.

3. Assembly device according to claim 2, wherein each cylinder (22) includes a countersunk head (22a) housed in a complementary cavity formed on an outer surface (12a) of the panel (12), in such a way that an end surface of said head is flush with said outer surface.

4. Assembly device according to claim 3, wherein each cylinder (22) also includes a threaded end, onto which is screwed a second nut (34) supported on an inner surface (12b) of the panel (12).

5. Assembly device according to any one of the claims 1 to 4, wherein the tension screws (20) of the mounts (16) of which the nuts (18) are arranged in different rows (R1, R2 ... R5) transmit appreciably different forces and have larger cross-sections when the forces transmitted are higher.

6. Assembly device according to any one of the claims 1 to 4, wherein the tension screws (20) of the mounts (16) of which the nuts (18) are arranged in different rows (R1, R2 ... R5) transmit appreciably different forces and are made of a material having greater tensile strength when the forces transmitted are higher.

7. Assembly device according to any one of the claims 1 to 4, wherein the tension screws (20) of the mounts (16) of which the nuts (18) are arranged in different rows (R1, R2 ... R5) transmit appreciably different forces and clamp more tightly when the forces transmitted are lower.

8. Assembly device according to any one of the claims 1 to 7, wherein said panel (12) is made of a composite material.

9. Assembly device according to any one of the claims 1 to 8, wherein said structure (14) is a metal panel, recesses (30) serving to house the heads (20a) of the tension screws (20) being machined in said metal panel.
